# EUROPÄISCHE PATENTANMELDUNG

(11) **EP 4 682 581 A1**
(43) Veröffentlichungstag der Anmeldung: **21.01.2026**
(21) Anmeldenummer: 25186280.1
(22) Anmeldetag: 30.06.2025
(51) Int. Cl.: G01S 7/481, G01S 17/48

(54) **OPTOELEKTRISCHER SENSOR ZUM ERFASSEN VON OBJEKTEN**

(30) Priorität: 15.07.2024 DE 102024120142
(71) Anmelder: Baumer Electric AG, 8500 Frauenfeld (CH)
(72) Erfinder: Clad, Marius, 8274 Gottlieben (CH); Lerchner, Henry, 9507 Stettfurt (CH)
(74) Vertreter: Strauss, Steffen

(57) **Zusammenfassung**

Die vorliegende Erfindung betrifft einen Optoelektrischer Sensor zum Erfassen von Objekten in einem Erfassungsbereich, aufweisend Lichtsendemittel, die so ausgebildet sind, dass Lichtsignale entlang eines Sendelichtpfads auf den Erfassungsbereich aussendbar sind; Lichtempfangsmittel, die so ausgebildet sind, dass an einem Objekt im Erfassungsbereich reflektierte und sich entlang eines Empfangslichtpfads ausbreitende Lichtsignale erfassbar sind; ein Sensorgehäuse, das einen Innenraum zur Aufnahme der Lichtsendemittel und der Lichtempfangsmittel in einem Auslieferzustand ausbildet, wobei das Sensorgehäuse eine Aufnahme zum Einführen eines Befestigungselements umfasst, um den optoelektrischen Sensor in einem Betriebszustand an einem externen Körper festzulegen. Erfindungsgemäße ist nun vorgesehene, dass in einer Seitenansicht des Sensorgehäuses die Aufnahme angeordnet ist in einem Bereich des Sensorgehäuses zwischen dem Sendelichtpfad und dem Empfangslichtpfad um einen Basisabstand zwischen den Lichtsendemitteln und den Lichtempfangsmitteln, der senkrecht zum Sendelichtpfad ausgerichtet ist, in Bezug auf ein Dimensionsmaß des Sensorgehäuses zu maximieren.

## Beschreibung

Die vorliegende Erfindung betrifft einen optoelektrischen Sensor zum Erfassen von Objekten in einem Erfassungsbereich nach Anspruch 1.

Optoelektrische Sensoren zum Erfassen von Objekten sind aus dem Stand der Technik allgemein bekannt.

Die bekannten optoelektrischen Sensoren senden Lichtsignale entlang eines Sendelichtpfads auf einen Erfassungsbereich aus.

An Objekten, die sich im Erfassungsbereich befinden, werden die ausgesendeten Lichtsignale reflektiert. Ein Teil der reflektierten Lichtsignale trifft wieder auf den Sensor. Zum Detektieren der reflektierten Lichtsignale umfasst der Sensor Lichterfassungsmittel. Somit kann die Anwesenheit von Objekten innerhalb des Erfassungsbereichs erkannt werden. Ferner ist es auch bekannt, dass der Einfallswinkel der reflektierten Lichtsignale ermittelt wird, um daraus den Abstand des Objekts vom Sensor zu bestimmen.

Bekannte optoelektrische Sensoren umfassen ein Sensorgehäuse zum Aufnehmen und Ausrichten der Lichtsendemittel und der Lichtempfangsmittel. Der Sensor wird in einem Betriebszustand über Befestigungselemente an einem externen Körper fixiert, um den Erfassungsbereich auf einen zu überwachenden Bereich auszurichten.

Um einen optoelektrischen Sensor in seiner Messgenauigkeit zu optimieren, ist prinzipiell ein großer Basisabstand erforderlich. Der Basisabstand ergibt sich in der vorliegenden Erfindung durch den senkrecht zum Sendelichtpfad verlaufenden Abstand der Lichtsendemittel von den Lichtempfangsmitteln.

Die aus dem Stand der Technik bekannten Sensoren umfassen zum Einführen eines Befestigungselements eine Aufnahme, die in einem Randabschnitt des Sensorgehäuses als Bohrung oder Längsloch ausgebildet ist.

Bei einem vordefinierten Basisabstand ist hierbei von Nachteil, dass sich das Dimensionsmaß des Sensors, also insbesondere die Höhen- und/oder Breitenerstreckung des Sensorgehäuses, vergrößert. Daher kommt es immer wieder vor, dass aufgrund der geringen Platzverhältnisse, Sensoren mit reduziertem Basisabstand eingesetzt werden müssen, die dann zum Erzielen von erforderlichen Messgenauigkeiten mit präziseren und somit teureren Lichtempfangsmitteln ausgestattet werden müssen.

Daher ist es die Aufgabe der vorliegenden Erfindung, die aus dem Stand der Technik bekannten Nachteile zu überwinden. Insbesondere ist es die Aufgabe der vorliegenden Erfindung ein optoelektrischen Sensor anzugeben, der bei einem bestimmten Dimensionsmaß einer Sensoreinheit einen maximierten Basisabstand aufweist.

Die Aufgabe wird durch einen erfindungsgemäßen optoelektrischen Sensor gemäß Anspruch 1 gelöst.

Vorteilhafte Weiterbildungen der Erfindung sind in den Unteransprüchen beschrieben. In den Rahmen der vorliegenden Erfindung fallen sämtliche Kombinationen aus zumindest zwei von in der Beschreibung, den Ansprüchen und/oder den Figuren offenbarten Merkmalen.

Der erfindungsgemäße optoelektrische Sensor ist zum Erfassen von Objekten in einem Erfassungsbereich ausgebildet. Bevorzugt handelt es sich bei dem erfindungsgemäßen optoelektrischen Sensor um einen Triangulationssensor.

Der erfindungsgemäße optoelektrische Sensor umfasst Lichtsendemittel, die so ausgebildet sind, dass Lichtsignale entlang eines Sendelichtpfads auf den Erfassungsbereich ausgesendet werden können.

Ferner umfasst der erfindungsgemäße optoelektrische Sensor Lichtempfangsmittel, die so ausgebildet sind, dass an einem Objekt im Erfassungsbereich reflektierte und sich entlang eines Empfangslichtpfads ausbreitende Lichtsignale erfasst und/oder detektiert werden können.

Innerhalb des Erfassungsbereichs kann sich das zu erfassende Objekt an unterschiedlichen Positionen befinden. Für die Vielzahl der möglichen Positionen ergibt sich bei einem gleichbleibenden und/oder identischen Sendelichtpfad stets ein individueller Empfangslichtpfad.

Ferner wird darauf hingewiesen, dass sich der Sendelichtpfad vom Empfangslichtpfad unterscheidet und/oder dass die Position der Lichtsendemittel im Sensorgehäuse von der Position der Lichtempfangsmittel abweicht und/oder dass die Lichtsendemittel und die Lichtempfangsmittel durch den Basisabstand voneinander beabstandet sind.

Der erfindungsgemäße optoelektrische Sensor umfasst ferner ein Sensorgehäuse, das einen Innenraum zum Aufnehmen der Lichtsendemittel und der Lichtempfangsmittel in einem Auslieferzustand ausbildet. Ferner umfasst das Sensorgehäuse eine Aufnahme für ein Befestigungselement, um den optoelektrischen Sensor in einem Betriebszustand an einem externen Körper festzulegen.

Erfindungsgemäß ist nun vorgesehen, dass die Aufnahme in einer Seitenansicht des Sensorgehäuses in einem Bereich ausgebildet ist, der sich zwischen dem Sendelichtpfad und dem Empfangslichtpfad erstreckt.

Vorteilhaft kann bei der Positionierung der Aufnahme im Sensorgehäuse der Basisabstand zwischen den Lichtsendemitteln und den Lichtempfangsmitteln, der senkrecht zum Sendelichtpfad verläuft, hinsichtlich eines Dimensionsmaßes des Sensorgehäuses, also insbesondere einer Höhenerstreckung des Sensorgehäuses, maximiert werden.

Anders ausgedrückt: Die Aufnahme befindet sich nicht, wie es im Stand der Technik üblich ist, in einem Randabschnitt des Sensorgehäuses, der zu einer Vergrößerung des Dimensionsmaß des Sensorgehäuses führt, sondern ist beim vorliegenden erfindungsgemäßen optoelektrischen Sensor innerhalb des Sensorgehäuses und/oder mitten im Sensorgehäuse und/oder innerhalb des vom Sensorgehäuse begrenzten Innenraums ausgebildet.

Der erfindungsgemäße Bereich für die mögliche Positionierung der Aufnahme zum Aufnehmen des Befestigungselements erstreckt sich zwischen den Lichtsendemitteln und den Lichtempfangsmitteln, wobei der Bereich in der Vorderseite des Gehäuses vom Sendelichtpfad und dem Empfangslichtpfad begrenzt wird.

Die Vorderseite des Sensorgehäuses, insbesondere die Sensorgehäusevorderseite, ist der Teil des Sensorgehäuses, der einen Fensterbereich für den Ein- und Austritt der Lichtsignale umfasst. An der Vorderseite erfolgt der Übergang der Lichtsignale zwischen einem ersten, gehäuseinneren Abschnitt und einem zweiten, gehäuseexternen Abschnitt.

In der Hinterseite des Sensorgehäuses wird der erfindungsgemäße Bereich insbesondere durch die Komponenten der Lichtsendemittel und der Lichtempfangsmittel und/oder durch eine gedachte Linie zwischen den hintersten Komponenten der Lichtsendemittel und der hintersten Komponenten der Lichtempfangsmittel begrenzt.

Die Hinterseite des Sensorgehäuses, insbesondere die Sensorgehäuserückseite, befindet sich gegenüberliegend zur Vorderseite, insbesondere der Sensorgehäusevorderseite.

Ferner ist der erfindungsgemäße Bereich derart ausgebildet, dass zwischen dem erfindungsgemäßen Bereich und der Hinterseite des Sensorgehäuses ein freier Zwischenraum entsteht. Der freie Zwischenraum ist insbesondere zur Aufnahme einer Platine vorgesehen, um Komponenten einer Hilfselektronik und/oder Komponenten einer Auswerteelektronik und/oder Komponenten einer Versorgungsspannungselektronik aufzunehmen.

Oder anders ausgedrückt ist es insbesondere vorgesehen, dass die Aufnahme, insbesondere der Mittelpunkt der Aufnahme, in der Seitenansicht des Sensorgehäuses in einem Bereich ausgebildet ist, der entlang der Höhenerstreckung des Sensorgehäuses zwischen Lichtempfangsmitteln und Lichtsendemitteln, sowie entlang der Breitenerstreckung des Sensorgehäuses auf Höhe der Lichtempfangsmittel liegt.

Weiterbildend ist es vorgesehen, dass die Aufnahme als ein den Innenraum vollständig durchdringender hülsenförmiger Rohrabschnitt ausgebildet ist.

Das Sensorgehäuse, das insbesondere aus einem Kunststoff und/oder einem Metall, insbesondere Edelstahl oder Aluminium, realisiert ist, umfasst insbesondere eine Wandung zum Umschließen und/oder Definieren des Innenraums.

Diese Wandung bildet bevorzugt die Sensorgehäusevorderseite und die Sensorgehäuserückseite und die Sensorgehäuseoberseite und die Sensorgehäuseunterseite und zwei Sensorgehäuseseitenseiten aus. Besonders bevorzugt ist eine der beiden Sensorgehäuseseitenseiten lösbar ausgebildet, um eine Montageöffnung zum Freigeben des Innenraums auszubilden. Ganz besonders bevorzugt ist der hülsenförmige Rohrabschnitt mit der Sensorgehäuseseite, die nicht lösbar ausgebildet ist, einstückig und/oder monolithisch verbunden.

Ferner umfasst das Sensorgehäuse insbesondere einen Gehäuseabschnitt zum Ausbilden des hülsenförmigen Rohrabschnitts. Der hülsenförmige Rohrabschnitt umfasst eine innere Öffnung zum Aufnehmen des Befestigungselements. Der Rohrabschnitt ist insbesondere so ausgebildet, dass die innere Öffnung das Sensorgehäuse vollständig durchdringt.

Ferner erstreckt sich der hülsenförmige Rohrabschnitt insbesondere ausgehend von einer festen Sensorgehäuseseite, insbesondere von einer Sensorgehäuseseitenseite, in den Innenraum.

Zudem ist weiterbildend geplant, dass der erfindungsgemäße Sensor eine Trägereinheit zum Aufnehmen und Ausrichten der Lichtsendemittel und der Lichtempfangsmittel umfasst, wobei die Trägereinheit insbesondere einen umfangsseitig geschlossenen Durchbruch umfasst, der im Auslieferzustand des Sensors die Aufnahme umschließt.

In diesem Zusammenhang ist es vorgesehen, dass die Aufnahme im erfindungsgemäßen Bereich positioniert ist, wobei der erfindungsgemäße Bereich vorliegend zusätzlich durch die Trägereinheit begrenzt ist.

Anders ausgedrückt, die Aufnahme ist in einer Seitenansicht des Sensorgehäuses nicht nur zwischen dem Sendelichtpfad und sämtlichen Empfangslichtpfad angeordnet, sondern auch in einem Bereich, in dem sich die Trägereinheit erstreckt.

Die Aufnahme ist somit insbesondere umfangsseitig vollständig von der Trägereinheit umgeben oder die Trägereinheit umfasst einen Durchbruch, der im Auslieferzustand und/oder im Betriebszustand die Aufnahme umfangsseitig umschließt und innerhalb des erfindungsgemäßen Bereichs liegt.

Bei einer bevorzugten Ausgestaltung ist die Trägereinheit nicht nur monolithisch und/oder einstückig ausgebildet, sondern auch aus einer Keramik oder aus einem Metall, insbesondere Stahl oder Aluminium, realisiert. Diese Materialien eignen sich aufgrund der geringen thermischen Ausdehnungskoeffizienten und ihrer mechanischen Stabilität im besonderen Maße zum Ausgestalten der erfindungsgemäßen Trägereinheit.

Bei einer bevorzugten Ausgestaltung des erfindungsgemäßen optoelektrischen Sensors umfassen die Lichtempfangsmittel eine Sammellinse zum Bündeln der sich entlang des Empfangslichtpfads ausbreitenden Lichtsignale auf ein lichtsensitives Erfassungselement sowie das lichtsensitive Erfassungselement.

Die Sammellinse ist in der Trägereinheit so positioniert und/oder ausgerichtet, dass in der Seitenansicht des Sensorgehäuses eine Senkrechte zum Sendelichtpfad sowohl durch den optischen Mittelpunkt, insbesondere den Masseschwerpunkt, der Sammellinse als auch im Wesentlichen durch den Mittelpunkt der Aufnahme verläuft.

Bevorzugt umfassen die Lichtempfangsmittel mehrere Linsen, insbesondere eine erste und eine zweite Sammellinse. Besonders bevorzugt umfassen die Lichtsendemittel eine optische Linse und/oder eine Lichtquelle, insbesondere eine LED-Diode oder eine Laserlichtquelle.

Vorteilhaft kann somit verhindert werden, dass sich bei einer thermischen Ausdehnung der Trägereinheit die Lage der Sammellinse seitlich und/oder hinsichtlich einer Breitenerstreckung des Sensorgehäuses verschiebt, da sich eine thermische Ausdehnung der Trägereinheit insbesondere im Wesentlichen entlang einer Höhenerstreckung des Sensorgehäuses auswirkt.

Anders ausgedrückt, die von Massenschwerpunkt der Sammellinse zum Mittelpunkt der Aufnahme aufgespannte Gerade ändert ihren Abstand zum zu erfassenden Objekt auch bei einer Wärmeausdehnung des Sensorgehäuses und/oder der Trägereinheit im Wesentlichen nicht oder nur minimal.

Weiterbildend ist es in diesem Zusammenhang vorgesehen, dass das lichtsensitive Erfassungselement eine Vielzahl lichtsensitiver Erfassungsbereiche aufweist. Diese Erfassungsbereiche sind zueinander unmittelbar benachbart angeordnet und relativ zur Sammellinse positioniert.

Die Vielzahl der Erfassungsbereiche, die einzeln auswertbar sind, ermöglichen den Winkel des Empfangslichtpfads relativ zum Sendelichtpfad zu erfassen, um somit den Abstand des Objekts vom Sensor zu bestimmen.

Vorteilhaft lässt sich der erfindungsgemäße optoelektrische Sensor als ein Triangulationssensor ausbilden.

Weiterbildend ist es auch besonders bevorzugt, wenn das Sensorgehäuse aus einem Kunststoff ausgebildet ist. Ein Sensorgehäuse aus Kunststoff lässt sich zu geringen Kosten herstellen und ist nicht elektrisch leitend.

Zudem umfasst das Sensorgehäuse wenigstens eine Ein- und Austrittsfläche für die Lichtsignale. Bevorzugt ist die Ein- und Austrittsfläche zumindest teilweise in einer Vorderseite des Sensorgehäuses, insbesondere in einer Sensorgehäusevorderseite, durch einen Fensterbereich ausgebildet. Besonders bevorzugt ist die Ein- und Austrittsfläche und/oder der Fensterbereich durch ein transparentes Element, insbesondere durch ein transparentes Kunststoffelement, ausgebildet und/oder abgedeckt.

Bei einer besonders bevorzugten Ausführungsform ist vorgesehen, dass der optische Sensor eine weitere Aufnahme zum Einführen eines weiteren Befestigungselements umfasst, um den optoelektrischen Sensor in dem Betriebszustand an dem externen Körper festzulegen und den Erfassungsbereich somit auf den zu überwachenden Bereich auszurichten.

Weiterbildend ist es in diesem Zusammenhang vorgesehen, dass die weitere Aufnahme in der Seitenansicht des Sensorgehäuses in einem Bereich des Sensorgehäuses ausgebildet ist, der sich innerhalb des Sensorgehäuses und in Bezug auf die Ausbreitungsrichtung der reflektierten Lichtsignale hinter den Lichtempfangsmitteln erstreckt. Die weitere Aufnahme ist insbesondere zumindest bereichsweise innerhalb des Innenraums ausgebildet und/oder durchdringt den Innenraum zumindest teilweise und/oder bereichsweise.

Weiterbildend ist es in diesem Zusammenhang vorgesehen, dass die weitere Aufnahme als ein den Innenraum vollständig durchdringender und/oder an den Innenraum unmittelbar angrenzender hülsenförmiger Rohrabschnitt ausgebildet ist. Anders ausgedrückt, die als hülsenförmiger Rohrabschnitt ausgebildete weitere Aufnahme durchdringt den Innenraum hinsichtlich einer Tiefenerstreckung des Sensorgehäuses vollständig.

Weiterbildend ist es in diesem Zusammenhang bevorzugt geplant, dass die weitere Aufnahme elastisch und/oder federnd ausgebildet ist, derart, dass das Sensorgehäuse zwischen der ersten und der weiteren Aufnahme zum Ausgleich thermisch induzierter Spannungen zwischen dem Sensorgehäuse und dem externen Körper flexibel und/oder hinsichtlich der Längenerstreckung des Sensorgehäuses zwischen den beiden Aufnahmen variabel ausgebildet ist.

Die Ausdehnung des Sensorgehäuses bei einer Temperaturänderung kann somit gezielt so beeinflusst werden, dass sich diese ausgehend von der ersten Aufnahme in Richtung der weiteren Aufnahme auswirkt.

Die zweite Aufnahme zeigt jedoch eine möglichst geringe Flexibilität in der Richtung orthogonal zu den von den zwei Aufnahmen aufgespannten Ebene, wobei die Ebene durch die jeweilige Mittelachse der beiden Aufnahmen aufgespannt wird.

Vorteilhaft kann somit eine negative Beeinflussung des Messergebnisses durch eine Verspannung und/oder eine Rotation um die erste Aufnahme des Sensorgehäuses mit einer negativen Auswirkung auf die Lichtsende- und Lichtempfangsmittel vermieden werden.

Weiterbildend ist es in diesem Zusammenhang vorgesehen, dass die weitere Aufnahme durch ein inneres und ein äußeres Hülsenelement ausgebildet ist, wobei das innere und das äußere Hülsenelement zueinander koaxial ausgerichtet und durch Stegelemente so voneinander beabstandet sind, dass sich das Sensorgehäuse entlang der Strecke zwischen der Aufnahme und der weiteren Aufnahme aufgrund eines zwischen den Stegelementen ausgebildeten freien Zwischenraums ausdehnen kann und wobei das innere Hülsenelement zur Aufnahme des Befestigungselements ausgebildet ist.

Im Folgenden ist die Erfindung beispielhaft mit Bezug auf die Zeichnungen näher erläutert. Die bei den gezeigten Ausführungsformen beispielhaft dargestellte Merkmalskombination kann nach Maßgabe der obigen Ausführungen entsprechend den für einen bestimmten Anwendungsfall notwendigen Eigenschaften des Erfindungsgegenstands durch weitere Merkmale ergänzt werden. Auch können, ebenfalls nach Maßgabe der obigen Ausführungen, einzelne Merkmale bei den beschriebenen Ausführungsformen weggelassen werden, wenn es auf die Wirkung dieses Merkmals in einem konkreten Anwendungsfall nicht ankommt.

In den Zeichnungen sind Elemente gleicher Funktion und/oder gleichen Aufbaus mit demselben Bezugszeichen bezeichnet.

Es zeigen:
- Fig. 1:: eine schematische Darstellung eines erfindungsgemäßen optoelektrischen Sensors gemäß einer ersten Ausführungsvariante in einer Draufsicht;
- Fig. 2:: eine schematische Darstellung eines erfindungsgemäßen optoelektrischen Sensors gemäß einer zweiten Ausführungsvariante in einer Draufsicht;
- Fig. 3:: eine schematische Explosionsdarstellung eines Sensorgehäuses und einer Trägereinheit gemäß einer dritten Ausführungsvariante des erfindungsgemäßen optoelektrischen Sensors und
- Fig. 4a/b: schematische Darstellungen des erfindungsgemäßen optoelektrischen Sensors für eine Nahbereich- und eine Fernbereichsüberwachung jeweils im Betriebszustand.

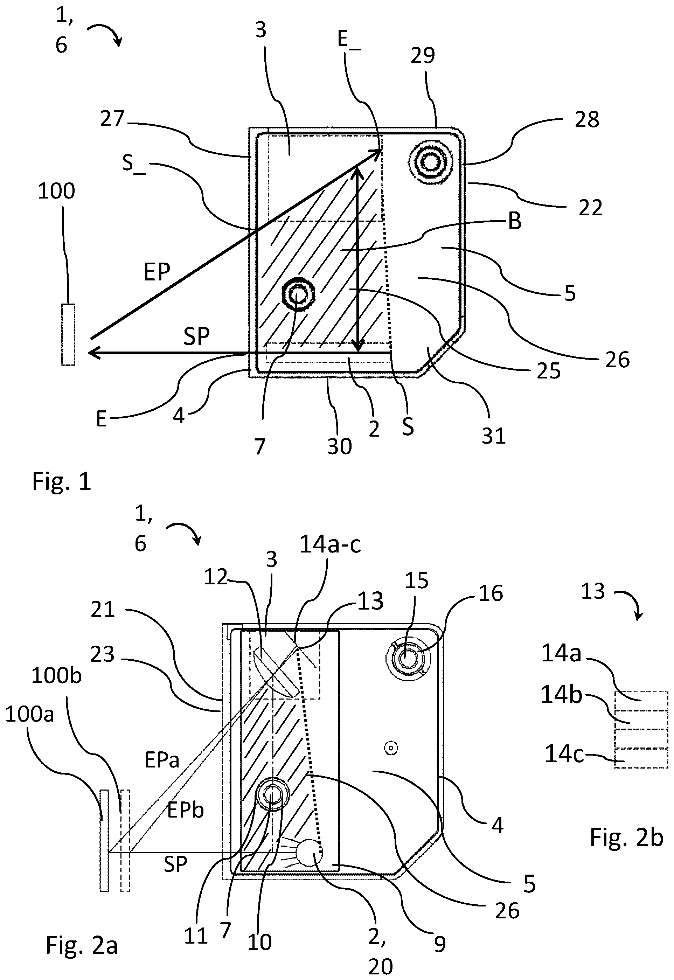

Die Fig. 1 zeigt einen optoelektrischen Sensor 1 gemäß einer ersten bevorzugten Ausführungsvariante in Draufsicht.

Der optoelektrische Sensor 1 ist zum Erfassen von Objekten 100 in einem Erfassungsbereich ausgebildet und umfasst Lichtsendemittel 2, Lichtempfangsmittel 3 sowie ein Sensorgehäuse 4.

Die erfindungsgemäßen Lichtsendemittel 2 sind zum Aussenden von Lichtsignalen ausgebildet. Die Lichtsignale breiten sich entlang eines Sendelichtpfads SP auf den Erfassungsbereich aus, um ein Objekt 100, das sich innerhalb des Erfassungsbereichs befindet, zu detektieren.

Für den Fall, dass sich ein Objekt 100 im Erfassungsbereich befindet, werden die Lichtsignale am Objekt 100 reflektiert und/oder remittiert. Ein Teil dieser Lichtsignale trifft dann wieder auf den Sensor 1.

Der erfindungsgemäße Sensor 1 umfasst ferner Lichtempfangsmittel 3 zum Erfassen der reflektierten und/oder remittierten Lichtsignale, die sich entlang eines Empfangslichtpfads EP vom Objekt 100 in Richtung des Sensors 1 ausbreiten und auf die Lichtempfangsmittel 3 auftreffen.

Zudem umfasst der erfindungsgemäße Sensor 1 ein Sensorgehäuse 4. Das erfindungsgemäße Sensorgehäuse 4 umfasst eine Wandung 22 und umschließt und/oder definiert einen Innenraum 5 zum Aufnehmen der Lichtsendemittel 2 und der Lichtempfangsmittel 3 in einem Auslieferzustand 6.

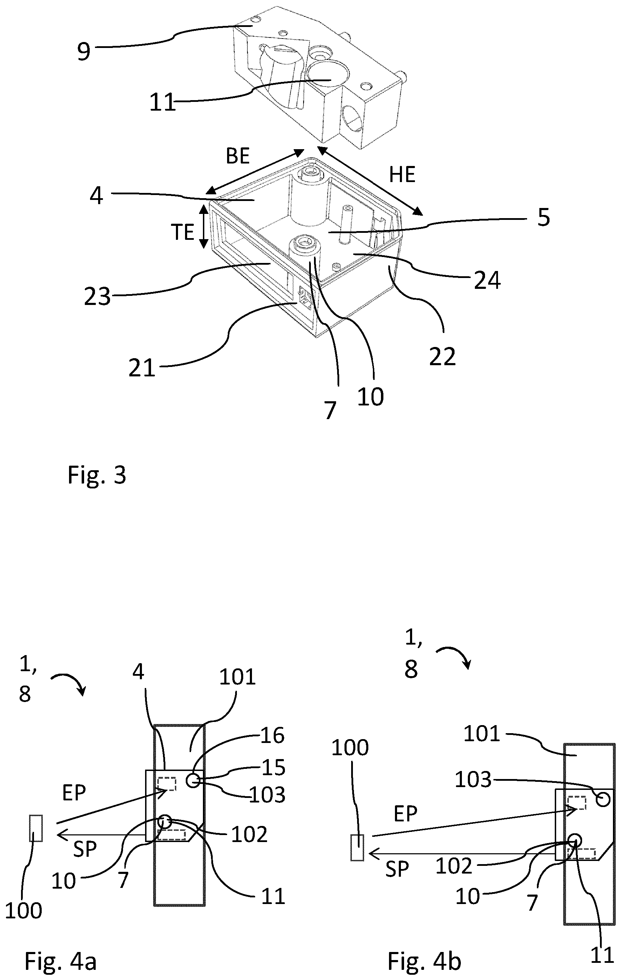

Ferner umfasst das Sensorgehäuse 4 eine Aufnahme 7, die zum Aufnehmen eines nicht in der Fig. 1 dargestellten Befestigungselements 102 ausgebildet ist, um den Sensor 1 in einem Betriebszustand 8 (vgl. Fig. 4a/b) an einem externen Körper 101 festzulegen. Die Aufnahme 7 durchdringt das Sensorgehäuse 4 vollständig.

Anders ausgedrückt, die Aufnahme 7 ist tunnelartig ausgebildet und stellt eine Öffnung bereit, in die ein längliches Befestigungselement, etwa eine Schraube, eingeführt und/oder aufgenommen werden kann, um den Sensor 1 insbesondere an einem externen Objekt festzulegen.

In einer Seitenansicht des Sensorgehäuses 4 ist die Aufnahme 7 in einem erfindungsgemäßen Bereich 25 des Sensorgehäuses 4 angeordnet. Der erfindungsgemäße Bereich 25 erstreckt sich zwischen dem Sendelichtpfad SP und dem Empfangslichtpfad EP.

Erfindungsgemäß vorteilhaft ermöglicht die Positionierung der Aufnahme 7 in dem erfindungsgemäßen Bereich 25, dass der Basisabstand B des optoelektrischen Sensors 1, der die Distanz und/oder die Spanne und/oder die räumliche Entfernung der Lichtsendemittel 2 einerseits und der Lichtempfangsmittel 3 andererseits beschreibt und senkrecht zu den Lichtsignalen des Sendelichtpfads SP verläuft, hinsichtlich des Dimensionsmaß des Sensorgehäuses 4, also insbesondere hinsichtlich der Breiten- bzw. Höhenerstreckung des Sensorgehäuses, maximiert werden kann. Vorteilhaft wird somit ein kompakter und kostengünstiger optoelektrischer Sensor 1 bereitgestellt, der für die Messbereichsüberwachung besonders geeignet ist.

Anders ausgedrückt, der erfindungsgemäße Bereich 25 (vergleiche hierzu die Schraffierung in der Fig. 1) erstreckt sich zwischen Komponenten der Lichtsendemittel 2 und Komponenten der Lichtempfangsmittel 3.

Bevorzugt sind die Komponenten der Lichtsendemittel 2 eine Lichtquelle oder eine LED-Diode und/oder eine Linse zum Fokussieren und/oder Bündeln der erzeugten Lichtsignale. Besonders bevorzugt sind die Komponenten der Lichtsendemittel 2 eine LED-Diode zum Erzeugen der Lichtsignale. Ganz besonders bevorzugt umfassen die Komponenten der Lichtsendemittel 2 ferner eine Blende.

Bevorzugt sind die Komponenten der Lichtempfangsmittel 3 wenigstens eine Linse, insbesondere wenigstens eine Sammellinse, sowie wenigstens ein lichtsensitives Element.

Ferner ist der erfindungsgemäße Bereich 25 im Sensorgehäuse 4 derart ausgebildet, dass im Innenraum 5 ein freier Zwischenraum 26 ausgebildet ist, um eine Platine mit Komponenten einer Auswerteelektronik und/oder Komponenten einer Hilfsspannungsversorgung aufzunehmen.

Der erfindungsgemäße Bereich 25 ist somit in Bezug auf eine Sensorgehäuserückseite 28 räumlich beabstandet.

Der erfindungsgemäße Bereich 25 ist dagegen in Bezug auf eine Sensorgehäusevorderseite 27 unmittelbar angrenzend ausgebildet.

Insbesondere wird der erfindungsgemäße Bereich 25 durch den Startpunkt S und Endpunkt E des Sendelichtpfads SP einerseits und den Startpunkt S_ und Endpunkt E_ des Empfangslichtpfads EP innerhalb des Sensorgehäuses 4 definiert.

Ferner wird darauf hingewiesen, dass die Wandung 22, die das Sensorgehäuse 4 ausbildet, eine Sensorgehäusevorderseite 27, die Sensorgehäuserückseite 28, eine Sensorgehäuseoberseite 29, eine Sensorgehäuseunterseite 30 eine untere oder linke Sensorgehäuseseitenseite 31 und eine nicht grafisch dargestellte obere oder rechte Sensorgehäuseseitenseite umfasst.

Ferner wird darauf hingewiesen, dass die nicht grafisch dargestellte obere Sensorgehäuseseitenseite lösbar ausgebildet ist, um somit eine Montageöffnung bereitzustellen.

Die Fig. 2a zeigt einen erfindungsgemäßen optoelektrischen Sensor 1 im Auslieferzustand 6 gemäß einer zweiten Ausführungsvariante.

Der Sensor 1 umfasst gemäß des ersten Ausführungsbeispiels ein Sensorgehäuse 4, wobei die Aufnahme 7 durch einen hülsenförmigen Rohrabschnitt 10 mit rundem Querschnitt ausgebildet ist.

Die Lichtsendemittel 2 des optoelektrischen Sensors 1 gemäß der zweiten Ausführungsvariante sind durch eine LED-Diode 20 realisiert. Die LED-Diode 20 sendet Lichtsignale auf den Erfassungsbereich aus, der sich in der figürlich dargestellten Draufsicht auf den Sensor 1 in einem linken Bereich der Figurenebene erstreckt.

Die Laser-Diode 20 wird zusammen mit den Lichtempfangsmitteln 3 von einer erfindungsgemäßen Trägereinheit 9 aufgenommen.

Die monolithische Trägereinheit 9, die aus einem keramischen Material mit einem geringen thermischen Ausdehnungskoeffizienten ausgebildet ist, erstreckt sich in einem vorderen Teilbereich des vom Sensorgehäuse 4 ausgebildeten Innenraums 5. Ferner umfasst die keramische Trägereinheit 9 zum Ausbilden der Aufnahme 7 einen umfangsseitig geschlossenen Durchbruch 11, der vorliegend einen runden Querschnitt umfasst.

Der Durchbruch 11 ist so dimensioniert, dass der Rohrabschnitt 10 gerade oder formschlüssig vom Durchbruch 11 aufgenommen werden kann. Ferner ist der Rohrabschnitt 10 so dimensioniert, dass ein Befestigungselement 102, insbesondere eine Schraube, gerade aufgenommen werden kann.

Die Aufnahme 7 ist im erfindungsgemäßen Bereich 26 positioniert, wobei der erfindungsgemäße Bereich 26 im vorliegenden Ausführungsbeispiel zusätzlich durch die Trägereinheit 7 definiert und/oder begrenzt ist. Anders ausgedrückt, im vorliegenden Ausführungsbeispiel ist die Aufnahme 7 in Bezug auf eine Seitenansicht des Sensorgehäuse 4 nicht nur zwischen dem Sendelichtpfad SP und sämtlichen Empfangslichtpfad EPa/b angeordnet, sondern auch in einem Bereich, in dem sich die Trägereinheit 7 erstreckt. Anders ausgedrückt, die Aufnahme 7 ist umfangsseitig vollständig von der Trägereinheit 7 umgeben oder die Trägereinheit 7 umfasst einen Durchbruch 11, der im Auslieferzustand 6 und/oder im Betriebszustand die Aufnahme 7 umfangsseitig umschließt.

An einer Vorderseite 21 des Sensorgehäuse 4 durchdringen die Lichtsignale das Sensorgehäuse 4 innerhalb eines Fensterbereichs 23. Der Fensterbereich 23 ist aus einem transparenten Material ausgebildet, um für die Lichtsignale durchlässig zu sein.

Die Lichtempfangsmittel 3 des Sensors 1 gemäß der zweiten Ausführungsvariante umfassen eine Sammellinse 12, die so in sämtlichen Empfangslichtpfaden EPa/b angeordnet ist, dass Lichtsignale, die an einem anwesenden Objekt reflektiert wurden und auf die Sammellinse 12 auftreffen, auf ein lichtsensitives Erfassungselement 13 gebündelt werden. Das lichtsensitive Erfassungselement 13 ist dazu eingerichtet, in Abhängigkeit der Intensität der auftreffenden Lichtsignale zumindest ein Messignal zu erzeugen.

Vorliegend umfasst das lichtsensitive Erfassungselement 13 eine Vielzahl von lichtsensitiven Erfassungsbereichen 14a-c, die jeweils zum Detektieren von auftreffenden Lichtsignalen ausgebildet sind. Die Vielzahl der lichtsensitiven Erfassungsbereiche 14a-c sind zueinander unmittelbar benachbart angeordnet und erstrecken sich in einer Erfassungsebene (vgl. hierzu auch eine stark schematisierte Draufsicht auf die Erfassungsebene des vorliegenden Erfassungselements gemäß der Fig. 2b).

Die individuelle Auswertung der Erfassungsbereiche 14a-c ermöglicht die Ausrichtung des Empfangslichtpfads in Bezug auf den Sendelichtpfad zu bestimmen. Somit lässt sich der Abstand eines Objekts 100a/b vom Sensor 1 ermitteln.

Ferner wird darauf hingewiesen, dass in der Fig. 2a im Erfassungsbereich des erfindungsgemäßen Sensors 1 zwei zu detektierende Objekte 100a/b an unterschiedlichen Positionen positioniert sind.

Aus den skizzierten Verläufen der Lichtsignale geht hervor, dass sich für die beiden Objekte 100a/b bei einem identischen Sendelichtpfad SP jeweils ein individueller Empfangslichtpfade EPa/b ergibt. Die Lichtsignale beider Empfangslichtpfade EPa/b treffen auf die Sammellinse 12 und werden auf zwei unterschiedliche Erfassungsbereiche 14a/b gebündelt.

Ferner umfasst auch der Sensor 1 gemäß der zweiten Ausführungsvariante eine weitere Aufnahme 15. Vorliegend ist die weitere Aufnahme 15 durch einen hülsenförmigen Rohrabschnitt 16 mit rundem Querschnitt ausgebildet, der das Sensorgehäuse 4 im Bereich des Innenraums 5 hinsichtlich der Tiefenerstreckung TE (vgl. Fig. 3) des Sensors 1 vollständig durchsetzt.

Dieser Rohrabschnitt 16, befindet sich in einem Bereich des Sensorgehäuses 4, der in Bezug auf den Verlauf des Empfangslichtpfads EPa/b hinter den Lichtempfangsmitteln 3 liegt.

Ferner befindet sich der weitere Rohrabschnitt 16 in einem Bereich des Innenraums 5, in dem sich die Trägereinheit 9 nicht erstreckt. Anders ausgedrückt, die erfindungsgemäße Trägereinheit 9 steht nur mit dem ersten Rohrabschnitt 10 in Wirkkontakt.

Die Fig. 2b zeigt stark schematisiert die vom lichtsensitiven Erfassungselement 13 ausgebildete Erfassungsebene, die durch die Vielzahl der lichtsensitiven Erfassungsbereiche 14a-c ausgebildet ist. Die Erfassungsbereiche 14a-c, sind zueinander unmittelbar benachbart angeordnet und können in der Anzahl stark variieren.

Die Fig. 3 zeigt das Sensorgehäuse 4 sowie die Trägereinheit 9 eines erfindungsgemäßen optoelektrischen Sensors 1 gemäß einer weiteren, hinsichtlich der bereits beschriebenen Ausführungsformen geringfügig modifizierten Ausführungsvariante in einer Explosionsansicht.

Das Sensorgehäuse 4 wird durch die Wandung 22 ausgebildet, die den Innenraum 5 umschließt und/oder definiert.

Ferner geht aus der Darstellung hervor, dass der hülsenförmige Rohrabschnitt 10, der die Aufnahme 7 zum Aufnehmen des Befestigungselements ausbildet, als freistehende Komponente im Bereich des Innenraums 5 und somit von der Wandung 22, die den Innenraum 5 umschließt und/oder definiert, beabstandet ist.

Zudem ist erkennbar, dass das Sensorgehäuse 4 an der Vorderseite 21 eine Öffnung zum Ausbilden des Fensterbereichs 23 umfasst. Im Auslieferzustand und/oder Betriebszustand ist die Öffnung durch ein transparentes Element, das für die Lichtsignale durchlassend ausgebildet ist, abgedeckt.

Ferner geht aus der Darstellung hervor, dass das Sensorgehäuse 4 eine seitliche Montageöffnung 24umfasst, die in der grafischen Darstellung nach oben ausgerichtet ist und die von einem nicht dargestellten Verkleidungselement, das die vollständige Gehäuseseite des Sensors 1 ausbildet, verschließbar ist.

Aus der Darstellung wird nun auch ersichtlich, dass die erfindungsgemäße Trägereinheit 9 Ausnehmungen umfasst, um die nicht dargestellten Lichtsendemittel 2 und die Lichtempfangsmittel 3 aufzunehmen. Ferner wird auch eine Ausnehmung zum Aufnehmen einer Sammellinse sichtbar, um die Lichtsignale auf das lichtsensitive Element zu bündeln.

Ferner ist in der vorliegenden Darstellung der umfangsseitig geschlossene Durchbruch 11 erkennbar, der so dimensioniert ist, dass der als separate Komponente im Innenraum 5 ausgebildete Rohrabschnitt 10 in den Durchbruch 11 einführbar und somit dort positionierbar ist.

Der Durchbruch 11 der Trägereinheit 9 ist vorliegend als eine Bohrung mit rundem Querschnitt ausgebildet. Der Durchmesser der Bohrung ist so gewählt, dass im Auslieferzustand des Sensors 1 der Rohrabschnitt 10 gerade in den Durchbruch 11 passt. Vorteilhaft kann somit über ein Befestigungselement sowohl die Trägereinheit 9 als auch das Sensorgehäuse 4 fixiert werden.

Ferner wird darauf hingewiesen, dass die Trägereinheit 9 durch eine Serie von Trägereinheiten 9 mit jeweils unterschiedlicher Position und/oder Ausrichtung der Lichtempfangsmittel 3 realisierbar ist. Konkret unterscheiden sich die verschiedenen Trägereinheiten 9 in der Ausrichtung der von den Lichtempfangsmitteln 3 umfassten Sammellinse 12. Vorteilhaft kann somit ein erfindungsgemäßer optoelektrischer Sensor entweder für den Nahbereich (vgl. insb. die Fig. 4a) oder für den Fernbereich (vgl. insb. die Fig. 4b) optimiert werden.

Weiterhin geht aus der Fig. 3 die Ausrichtung der Dimensionsmaße des Sensorgehäuses 4 - und somit des erfindungsgemäßen Sensors 1 - hervor, dass sich aus der Tiefenerstreckung TE, der Höhenerstreckung HE und der Breitenerstreckung BE zusammensetzt.

Die Fig. 4a/b zeigen zwei unterschiedliche bevorzugte Ausgestaltungen des erfindungsgemäßen optoelektrischen Sensors 1 jeweils im Betriebszustand 8.

Im Betriebszustand 8 bedeutet, dass der erfindungsgemäße optoelektrische Sensor 1 durch zwei Befestigungselemente 102/103 an einem externen Körper 101 so festgelegt ist, dass der Erfassungsbereich des Sensors 1 auf den zu überwachenden Bereich ausgerichtet ist.

Konkret bedeute dies, dass ein erstes Befestigungselement 102 im hülsenförmigen Rohrabschnitt 10 angeordnet ist, das den Sensor 1 somit am externen Körper 101 fixiert.

Ferner ist ein weiteres Befestigungselement 103 in der weiteren Aufnahme 15 angeordnet, wobei die weitere Aufnahme 15 auch hier durch einen weiteren hülsenförmigen Rohrabschnitt 16 ausgebildet ist.

Das Ausführungsbeispiel des optoelektrischen Sensors 1 gemäß der Fig. 4a ist für eine Nahbereichsüberwachung ausgebildet und das Ausführungsbeispiel des optoelektrischen Sensors 1 gemäß der Fig. 4b ist für eine Fernbereichsüberwachung eingerichtet.

Realisiert wird dies durch zwei unterschiedliche Trägereinheiten 9, die eingerichtet sind entweder zum Empfangen von Lichtsignalen unter einem großen Winkelbereich zwischen dem Sendelichtpfad SP und dem Empfangslichtpfad EP zum Realisieren einer Nahbereichsüberwachung oder unter einem kleinen Winkelbereich zwischen dem Sendelichtpfad SE und dem Empfangslichtpfad EP zum Realisieren der Fernbereichsüberwachung.

Vorteilhaft lässt sich der erfindungsgemäße Sensor 1 somit einfach an unterschiedliche Anwendungsfälle anpassen, wobei sich die Komponenten bis auf die Trägereinheit 9 nicht voneinander unterscheiden.

## Patentansprüche

1. Optoelektrischer Sensor (1), insbesondere Triangulationssensor, zum Erfassen von Objekten (100) in einem Erfassungsbereich, aufweisend
- Lichtsendemittel (2), die so ausgebildet sind, dass Lichtsignale entlang eines Sendelichtpfads (SE) auf den Erfassungsbereich aussendbar sind;
- Lichtempfangsmittel (3), die so ausgebildet sind, dass an einem Objekt (100) im Erfassungsbereich reflektierte und sich entlang eines Empfangslichtpfads (EP) ausbreitende Lichtsignale erfassbar sind;
- ein Sensorgehäuse (4), das einen Innenraum (5) zur Aufnahme der Lichtsendemittel (2) und der Lichtempfangsmittel (3) in einem Auslieferzustand (6) ausbildet, wobei das Sensorgehäuse (4) eine Aufnahme (7) zum Einführen eines Befestigungselements (102) umfasst, um den optoelektrischen Sensor (1) in einem Betriebszustand (8) an einem externen Körper (101) festzulegen;
**dadurch gekennzeichnet,**
**dass** in einer Seitenansicht des Sensorgehäuses (4) die Aufnahme (7) angeordnet ist in einem Bereich des Sensorgehäuses (4) zwischen dem Sendelichtpfad (SP) und dem Empfangslichtpfad (EP), um einen Basisabstand (B) zwischen den Lichtsendemitteln (2) und den Lichtempfangsmitteln (3), der senkrecht zum Sendelichtpfad (SE) ausgerichtet ist, in Bezug auf ein Dimensionsmaß des Sensorgehäuses (4) zu maximieren.

2. Optoelektrischer Sensor nach Anspruch 1,
**dadurch gekennzeichnet,**
**dass** die Aufnahme (7) als ein den Innenraum (5) vollständig durchdringender hülsenförmiger Rohrabschnitt (10) ausgebildet ist.

3. Optoelektrischer Sensor nach einem der vorgenannten Ansprüche,
**gekennzeichnet durch** eine vom Sensor (1) umfasste Trägereinheit (9) zum Aufnehmen und Ausrichten der Lichtsendemittel (2) und der Lichtempfangsmittel (3), wobei die Trägereinheit (9) insbesondere einen umfangsseitig geschlossenen Durchbruch (11) umfasst, der im Auslieferzustand (6) des Sensors (1) die Aufnahme (7) umschließt.

4. Optoelektrischer Sensor nach einem der vorgenannten Ansprüche,
**dadurch gekennzeichnet,**
**dass** die Lichtempfangsmittel (2) eine Sammellinse (12) zum Bündeln der sich entlang des Empfangslichtpfads(EP) ausbreitenden Lichtsignale auf ein lichtsensitives Erfassungselement (13) sowie das lichtsensitive Erfassungselement (13) aufweisen, wobei die Sammellinse (12) in der Trägereinheit (9) so positioniert und/oder ausgerichtet ist, dass in der Seitenansicht des Sensorgehäuses (4) eine Senkrechte zum Sendelichtpfad (SP) sowohl durch den optischen Mittelpunkt, insbesondere den Masseschwerpunkt, der Sammellinse als auch im Wesentlichen durch den Mittelpunkt der Aufnahme verläuft.

5. Optoelektrischer Sensor nach Anspruch 4,
**dadurch gekennzeichnet,**
**dass** das lichtsensitive Erfassungselement (13) eine Vielzahl lichtsensitiver Erfassungsbereiche (14a-c) umfasst, die zueinander unmittelbar benachbart angeordnet sind, um die Ausrichtung des Empfangslichtpfads (EP) relativ zum Sendelichtpfad (SP) und somit den Abstand des Objekts (100) vom Sensor (1) zu bestimmen.

6. Optoelektrischer Sensor nach einem der vorgenannten Ansprüche,
**dadurch gekennzeichnet,**
**dass** das Sensorgehäuse (4) eine weitere Aufnahme (15) zum Einführen eines weiteren Befestigungselements (103) umfasst, um den optoelektrischen Sensor (1) in dem Betriebszustand (8) an dem externen Körper (101) festzulegen und den Erfassungsbereich auf den zu überwachenden Bereich auszurichten.

7. Optoelektrischer Sensor nach Anspruch 6,
**dadurch gekennzeichnet,**
**dass** in der Seitenansicht des Sensorgehäuses (4) die weitere Aufnahme (15) in einem Bereich des Sensorgehäuses (4) ausgebildet ist, der hinsichtlich des Verlaufs der Lichtsignale entlang des Empfangslichtpfads (EP) hinter den Lichtempfangsmitteln (3) angeordnet ist.

8. Optoelektrischer Sensor nach Anspruch 6 oder 7,
**dadurch gekennzeichnet,**
**dass** die weitere Aufnahme (15) als ein den Innenraum (5) hinsichtlich einer Tiefenerstreckung (TE) des Sensorgehäuses (4) vollständig durchdringender und/oder an den Innenraum (5) unmittelbar angrenzender hülsenförmiger Rohrabschnitt (16) ausgebildet ist.

9. Optoelektrischer Sensor nach einem der Ansprüche 6 bis 8,
**dadurch gekennzeichnet,**
**dass** die weitere Aufnahme (15) durch ein inneres und ein äußeres Hülsenelement (17a/b) ausgebildet ist, wobei das innere und das äußere Hülsenelement (17a/b) zueinander koaxial ausgerichtet und durch Stegelemente (18) so voneinander beabstandet sind, dass sich das Sensorgehäuse (4) entlang der Strecke zwischen der Aufnahme (7) und der weiteren Aufnahme (15) aufgrund eines zwischen den Stegelementen (18) ausgebildeten freien Zwischenraums (19) ausdehnen kann und wobei das innere Hülsenelement (17a) zum Aufnehmen des weiteren Befestigungselements (103) ausgebildet ist.
